(19) Europäisches Patentamt
European Patent Office
Office européen des brevets

(11) **EP 3 835 185 A1**

(12) **EUROPÄISCHE PATENTANMELDUNG**

(43) Veröffentlichungstag:
16.06.2021  Patentblatt 2021/24

(51) Int Cl.:
*B62J 27/00* (2020.01)  *B62K 7/00* (2006.01)
*B62M 6/45* (2010.01)  *B62M 6/50* (2010.01)

(21) Anmeldenummer: 20211054.0

(22) Anmeldetag: 01.12.2020

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(30) Priorität: 09.12.2019  DE 102019219164
15.01.2020  DE 102020200432

(71) Anmelder: **Robert Bosch GmbH**
**70442 Stuttgart (DE)**

(72) Erfinder:
• **Weinmann, Matthias**
**72336 Balingen (DE)**
• **Baumgaertner, Daniel**
**72072 Tuebingen (DE)**
• **Ickenroth, Jana Maria**
**72764 Reutlingen (DE)**
• **Dackermann, Tim**
**72074 Tuebingen (DE)**

(54) **VERFAHREN ZUR STEUERUNG EINES ELEKTROMOTORS EINES ELEKTROFAHRRADS ZUM ANTRIEB DES ELEKTROFAHRRADS, STEUERGERÄT UND ELEKTROFAHRRAD**

(57)  Verfahren zur Steuerung eines Elektromotors (111) eines Elektrofahrrads (100) zum Antrieb des Elektrofahrrads (100), umfassend die Schritte: Erfassung (220) einer Längsbeschleunigung (a) des Elektrofahrrads (100) in Richtung der Längsachse (190) des Elektrofahrrads (100); und Erzeugung (290) eines Motordreh-moments (MM) mittels des Elektromotors (111) in Abhängigkeit der erfassten Längsbeschleunigung (a), wobei das Motordrehmoment (MM) solange angepasst wird, bis eine vorgegebene Sollbeschleunigung erreicht beziehungsweise über- oder unterschritten ist.

**FIG. 1**

EP 3 835 185 A1

**Beschreibung**

Die vorliegende Erfindung betrifft ein Verfahren zur Steuerung eines Elektromotors eines Elektrofahrrads zum Antrieb des Elektrofahrrads, wobei ein Motordrehmoment mittels des Elektromotors in Abhängigkeit einer ermittelten Längsbeschleunigung erzeugt wird. Die Erfindung betrifft ferner ein Steuergerät, welches dazu eingerichtet ist, das erfindungsgemäße Steuerungsverfahren durchzuführen. Die Erfindung betrifft auch ein Elektrofahrrad mit diesem Steuergerät.

Stand der Technik

EP 2 931 550 B1 offenbart ein Verfahren zur Gesamtmassebestimmung eines elektrisch antreibbaren Fahrzeugs, wobei ein Teil des Antriebsmoments durch einen Fahrer aufgebracht wird. In diesem Verfahren erfolgt eine Bestimmung einer Gesamtmasse bei einem bestimmten Antriebsdrehmoment des Fahrers von 0 Nm.

Aus der DE 10 2010 017 742 A1 ist ein Verfahren zur Ansteuerung eines Elektromotors eines Fahrzeugs bekannt.

Bei einer veränderten Masse zumindest eines Teils eines Elektrofahrrads, beziehungsweise bei einer veränderten Gesamtmasse des Elektrofahrrads resultiert im Stand der Technik eine veränderte Beschleunigung des Elektrofahrrads bei gleichem Fahrerdrehmoment. Beispielsweise resultiert bei gleichem Fahrerdrehmoment für ein Lastenfahrrad als Elektrofahrrad vor einer Beladung eine höhere Beschleunigung des Lastenfahrrads als nach der Beladung des Lastenfahrrads mit einer schweren Zuladung. Mit anderen Worten resultiert im Falle einer veränderten Gesamtmasse des Elektrofahrrads ein untypisches und/oder ungewünschtes Beschleunigungsverhalten des Elektrofahrrads.

Die Beschleunigung des Elektrofahrrads kann ebenso durch eine veränderte Reibung von drehenden Komponenten des Antriebsstrangs, wie beispielsweise unterschiedliche Reifentypen und/oder abgenutzte beziehungsweise unterschiedliche Lager der Achsen beziehungsweise Wellen des Antriebsstrangs, oder sich verändernden Umgebungsbedingungen, wie beispielsweise bei zunehmendem Gegenwind und/oder in Abhängigkeit eines Untergrunds der Fahrtstrecke, beispielsweise bei Pflastersteinen, und/oder bei einer Fahrt an einer Steigung einer Fahrtstrecke, variieren.

Die Aufgabe der vorliegenden Erfindung ist es, ein Fahrverhalten eines Elektrofahrrads zu verbessern, beispielsweise im Falle einer veränderten Gesamtmasse des Elektrofahrrads und/oder im Falle veränderter Reibwerte des Antriebsstrangs des Elektrofahrrads und/oder im Falle veränderter Umgebungsbedingungen.

Offenbarung der Erfindung

Die vorstehende Aufgabe wird gemäß der unabhängigen Ansprüche 1, 10 und 11 erfindungsgemäß gelöst.

Die vorliegende Erfindung betrifft ein Verfahren zur Steuerung beziehungsweise Regelung eines Elektromotors eines Elektrofahrrads zum Antrieb des Elektrofahrrads. Das Elektrofahrrad ist insbesondere ein elektrisch kraftunterstütztes Lastenfahrrad. Ein solches Lastenfahrrad ist vorteilhafterweise dazu eingerichtet, auf einer Transportfläche größere Zuladungen zu transportieren, beispielsweise mindestens ein Kind und/oder schwerere Einkäufe und/oder Getränkekisten. In einem Verfahrensschritt wird eine Längsbeschleunigung des Elektrofahrrads in Richtung der Längsachse des Elektrofahrrads erfasst. Diese Erfassung erfolgt insbesondere mittels eines Beschleunigungssensors oder einer inertialen Sensoreinheit. In einem anschließenden Schritt wird ein Motordrehmoment mittels des Elektromotors in Abhängigkeit der erfassten Längsbeschleunigung des Elektrofahrrads erzeugt beziehungsweise angepasst, wobei das Motordrehmoment solange angepasst wird, bis eine vorgegebene Sollbeschleunigung erreicht beziehungsweise über- oder unterschritten ist, insbesondere erfolgt die Anpassung während beziehungsweise in einer vorgegebenen Zeitspanne. Vorteilhafterweise resultiert durch das Verfahren eine im Wesentlichen von der Gesamtmasse des Elektrofahrrads, von Reibwerten des Antriebsstrangs und/oder von sich ändernden Umgebungsbedingungen unabhängige Längsbeschleunigung des Elektrofahrrads. Durch das Verfahren resultiert ferner der Vorteil, dass das Elektrofahrrad bei gleicher Trittkraft des Nutzers mit einer für den Nutzer bekannten vorgegebenen Sollbeschleunigung beschleunigt wird. Mit anderen Worten wird das erzeugte Motordrehmoment vorteilhafterweise an die aktuelle Gesamtmasse des Elektrofahrrads, an die aktuellen Reibwerte des Antriebsstrangs und/oder an sich ändernde Umgebungsbedingungen beziehungsweise die erfasste Längsbeschleunigung angepasst, wodurch, insbesondere nach der definierten vorgegebenen Zeitspanne, bei gleicher Trittkraft des Nutzers eine vorgegebene Sollbeschleunigung des Elektrofahrrads resultiert. Es kann vorteilhafterweise vorgesehen sein, dass die vorgegebene Zeitspanne in Abhängigkeit einer Steigung der Fahrtstrecke und/oder in Abhängigkeit einer Eingabe des Nutzers angepasst wird. Vorteilhafterweise liegen für einen Schiebehilfe-Betriebsmodus und für durch Eingabe des Nutzers wählbare unterschiedliche Assistenzverhältnisse jeweils ein vorgegebener Sollbeschleunigungswert vor. Die vorgegebenen Sollbeschleunigungswerte des Schiebehilfe-Betriebsmodus und/oder des jeweiligen gewünschten Assistenzverhältnisses können sich vorteilhafterweise voneinander unterscheiden. Beispielsweise weist das Verfahren eine erste vorgegebene Sollbeschleunigung für ein erstes Assistenzverhältnis, eine zweite vorgegebene Sollbeschleunigung für ein zweites Assistenzverhältnis und/oder eine dritte vorgegebene Sollbeschleunigung für ein drittes Assistenzverhältnis und/oder eine weitere vorgegebene Sollbeschleunigung zum Schiebehilfe-Betriebsmodus auf.

Das Motordrehmoment des Elektromotors wird in einer bevorzugten Ausgestaltung angepasst, sobald die erfasste Längsbeschleunigung einen ersten Längsbeschleunigungsschwellenwert unterschreitet und/oder einen zweiten Längsbeschleunigungsschwellenwert überschreitet. Das Verfahren wird ferner bevorzugt nur durchgeführt, wenn eine erfasste Trittkraft des Nutzers einen Trittkraftschwellenwert überschreitet und/oder eine erfasste Trittfrequenz des Nutzers einen Trittfrequenzschwellenwert überschreitet, wodurch eine gewünschte Beschleunigungsphase erkannt wird. Im Verfahren resultiert der Vorteil, dass das Beschleunigungsverhalten des Elektrofahrrads genau und nur in vom Nutzer gewünschten Fahrsituationen eingestellt wird, wobei auch eine manuelle Beschleunigungskomponente basierend auf der Trittkraft des Nutzers berücksichtigt wird.

Das Steuerungsverfahren umfasst in einer weiteren Ausgestaltung den Schritt einer Ermittlung einer Masse zumindest eines Teils des Elektrofahrrads. Die ermittelte Masse repräsentiert insbesondere ein Gewicht einer Zuladung und/oder ein Gewicht eines Nutzers des Elektrofahrrads, wobei das Elektrofahrrad insbesondere ein Lastenrad ist. Die Masse kann vorteilhafterweise mittels eines Sensors an einer Ladefläche des Elektrofahrrads und/oder mittels eines weiteren Sensors an einem Sattel des Elektrofahrrads erfasst beziehungsweise ermittelt werden. Die Gesamtmasse des Elektrofahrrads kann alternativ in Abhängigkeit erfasster Fahrtgrößen des Elektrofahrrads ermittelt werden, beispielsweise gemäß der Schrift EP 2 931 550 B1. In einem anschließenden Schritt wird das Motordrehmoment mittels des Elektromotors zusätzlich in Abhängigkeit der ermittelten Masse erzeugt. Durch diese Ausgestaltung wird der Vorteil erzeugt, dass das erzeugte Motordrehmoment beziehungsweise das resultierende Beschleunigungsverhalten unmittelbar nach einer veränderten Gesamtmasse des Elektrofahrrads, insbesondere einer veränderten Masse einer Zuladung, an einen jeweiligen vorgegebenen Sollbeschleunigungswert angepasst wird.

Besonders bevorzugt wird in einer Ausgestaltung eine Trittkraft des Nutzers erfasst. Vorteilhafterweise wird ein Fahrerdrehmoment an einer Tretachse des Elektrofahrrads erfasst, wobei das Fahrerdrehmoment die Trittkraft repräsentiert. Des Weiteren wird in dieser Ausgestaltung in einem Schritt des Verfahrens eine Eingabe des Nutzers zu einem gewünschten Unterstützungsgrad beziehungsweise zu einem gewünschten Assistenzverhältnis zur Kraftunterstützung des Elektrofahrrads erfasst. Die Erzeugung des Motordrehmoments erfolgt anschließend zusätzlich in Abhängigkeit der erfassten Trittkraft und in Abhängigkeit des erfassten Assistenzverhältnisses, wobei das erfasste gewünschte Assistenzverhältnis in Abhängigkeit des erfassten Längsbeschleunigungswertes angepasst wird und/oder der erste und/oder zweite Längsbeschleunigungsschwellenwert in Abhängigkeit des erfassten Assistenzverhältnisses oder der erste und/oder zweite Längsbeschleunigungsschwellenwert in Abhängigkeit des angepassten Assistenzverhältnisses geändert wird. Durch diese Ausgestaltung resultiert vorteilhafterweise eine massenunabhängige, reibwertunabhängige und/oder umgebungsbedingungsunabhängige Beschleunigung des Elektrofahrrads bei gleicher Trittkraft des Nutzers.

In einer anderen Ausführung erfolgt eine Ermittlung eines aktuellen Gefährdungspotentials in Abhängigkeit einer aktuellen Position des Elektrofahrrads und/oder in Abhängigkeit eines mittels einer Kamera am Elektrofahrrad erfassten Kamerabildes, wobei das Gefährdungspotential insbesondere eine aktuelle Wetterlage und/oder eine aktuelle Verkehrsdichte und/oder eine aktuelle Gefahrenstelle in der Umgebung des Elektrofahrrads repräsentiert. Es kann optional vorgesehen sein, dass eine aktuelle Position des Elektrofahrrads mittels eines am Elektrofahrrad angeordneten Ortssensors ermittelt wird, wobei der Ortssensor die geografische Position des Elektrofahrrads beispielsweise mittels eines satellitengestützten Navigationssystems ermittelt. Die ermittelte Position des Elektrofahrrads wird anschließend an eine Servereinheit gesendet. Danach wird das aktuelle Gefährdungspotential von der Servereinrichtung in Abhängigkeit der ermittelten geografischen Position des Elektrofahrrads durch das Elektrofahrrad empfangen, wobei die Aussendung der Position des Elektrofahrrads und der Empfang des aktuellen Gefährdungspotentials beispielsweise mittels einer Empfangs- und Sendeeinheit erfolgt, insbesondere mittels einer Mobilfunkverbindung. Die Erzeugung des Motordrehmoments erfolgt in dieser Ausführung zusätzlich in Abhängigkeit des ermittelten und/oder empfangenen aktuellen Gefährdungspotentials. Vorteilhafterweise wird ein Betrag des erzeugten Motordrehmoments in Abhängigkeit des ermittelten und/oder empfangenen aktuellen Gefährdungspotentials begrenzt. Es kann alternativ oder zusätzlich vorgesehen sein, dass das durch eine erfasste Eingabe des Nutzers gewählte Assistenzverhältnis zur Unterstützung des Nutzers und/oder der erste und/oder zweite Längsbeschleunigungsschwellenwert in Abhängigkeit des ermittelten und/oder empfangenen aktuellen Gefährdungspotentials angepasst wird. In dieser Ausgestaltung kann die Beschleunigung des Elektrofahrrads vorteilhafterweise an das aktuelle Gefährdungspotential angepasst werden, so dass eine sichereres Beschleunigungsverhalten beziehungsweise eine sicherere Fahrt des Elektrofahrrads resultiert.

In einer anderen Ausführung wird eine Trittfrequenz des Nutzers erfasst. Die Erfassung der Trittfrequenz erfolgt insbesondere an der Tretachse des Elektrofahrrads. In dieser Ausführung wird das Motordrehmoment zusätzlich in Abhängigkeit der erfassten Trittfrequenz erzeugt. Dadurch resultiert der Vorteil, dass eine gewünschte Beschleunigungsphase des Elektrofahrrads schnell erkannt sowie die resultierende Beschleunigung des Elektrofahrrads genauer und/oder schneller beziehungsweise dynamischer an das gewünschte Fahrverhalten des Nutzers angepasst wird.

Es kann ferner optional in einer weiteren Ausgestaltung vorgesehen sein, dass ein Nickwinkel des Elektrofahrrads erfasst wird. Der Nickwinkel repräsentiert eine Drehung des Elektrofahrrads um die Querachse des Elektrofahrrads.

Die Erzeugung des Motordrehmoments erfolgt in dieser Ausgestaltung zusätzlich in Abhängigkeit des erfassten Nickwinkels. Dadurch resultiert der Vorteil, dass die resultierende Beschleunigung des Elektrofahrrads auch an eine Steigung einer Fahrtstrecke des Elektrofahrrads angepasst wird. Insbesondere wird der Betrag des Motordrehmoments mit zunehmendem Nickwinkel stetig ansteigend erzeugt. Durch diese Ausgestaltung beschleunigt das Elektrofahrrad auch bei einer aufwärts gerichteten Fahrt des Elektrofahrrads an einer Steigung der Fahrtstrecke in gewünschter beziehungsweise gewohnter Art und Weise beziehungsweise zumindest im Wesentlichen gleichbleibend und für den Nutzer nachvollziehbar mit der jeweiligen vorgegebenen Sollbeschleunigung für beispielsweise das gewählte Assistenzverhältnis oder die Schiebehilfe.

In einer anderen Weiterbildung kann das Steuerungsverfahren den Schritt einer Erkennung einer Aktivierung einer Schiebehilfe umfassen. Dieser Schiebehilfe-Betriebsmodus wird vorteilhafterweise von einem Nutzer an steileren Anstiegen beziehungsweise Steigungen der Fahrtstrecke aktiviert. Der Nutzer bringt in dieser Weiterbildung vorteilhafterweise keine Trittkraft auf. Mit anderen Worten läuft beziehungsweise geht der Nutzer in dieser Weiterbildung neben dem Elektrofahrrad, wobei der Nutzer das Elektrofahrrad mit einer manuellen Schiebekraft schiebt. Bei aktivierter Schiebehilfe wird der Nutzer durch das erzeugte Motordrehmoment in dieser Weiterbildung beim Schieben des Elektrofahrrads unterstützt. In dieser Weiterbildung wird die Erzeugung des Motordrehmoments zusätzlich in Abhängigkeit der erkannten Aktivierung der Schiebehilfe durchgeführt.

Die Erfindung betrifft auch ein Steuergerät, wobei das Steuergerät dazu eingerichtet ist, ein erfindungsgemäßes Steuerungsverfahren durchzuführen. Das Steuergerät erfasst vorteilhafterweise die Längsbeschleunigung des Elektrofahrrads beziehungsweise eine Größe, welche die Längsbeschleunigung repräsentiert, mittels eines Beschleunigungssensors oder einer intertialen Mess- beziehungsweise Sensoreinheit. Anschließend steuert das Steuergerät vorteilhafterweise den Elektromotor zur Erzeugung des Motordrehmoments in Abhängigkeit der erfassten Längsbeschleunigung. Die Steuerung zur Erzeugung des Motordrehmoments wird insbesondere solange angepasst, bis eine vorgegebene Sollbeschleunigung erreicht beziehungsweise überschritten wird. Das Steuergerät ist insbesondere Teil einer Antriebseinheit, welche ferner vorteilhafterweise den Elektromotor umfasst.

Die Erfindung betrifft des Weiteren ein Elektrofahrrad, aufweisend das erfindungsgemäße Steuergerät.

Weitere Vorteile ergeben sich aus der nachfolgenden Beschreibung von Ausführungsbeispielen mit Bezug zu den Figuren.

Figur 1:     Elektrofahrrad

Figur 2:     Ablaufdiagramm des Steuerungsverfahrens als Blockschaltbild

Figur 3:     Diagramm zur Abhängigkeit des Assistenzverhältnisses

Ausführungsbeispiele

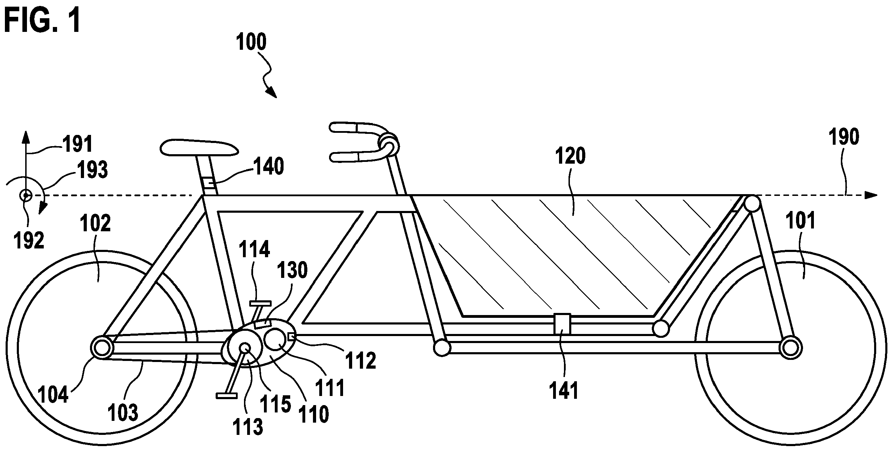

In Figur 1 ist ein Lastenfahrrad als Elektrofahrrad 100 mit einem Vorderrad 101 und einem Hinterrad 102 zum Antrieb des Elektrofahrrads 100 dargestellt. Das Lastenfahrrad wird mittels eines Lenkers und einem Gestänge, welches zwischen dem Lenker und dem Vorderrad 101 angeordnet ist, gelenkt. Das Lastenfahrrad umfasst ferner eine Antriebseinheit 110, wobei die Antriebseinheit 110 einen Elektromotor 111 und eine Sensoreinheit 112 sowie einen Steuergerät 130 umfasst. Das Steuergerät 130 ist dazu eingerichtet, den Elektromotor 111 anzusteuern. Der Elektromotor 111 ist dazu eingerichtet, ein Motordrehmoment zu erzeugen, welches mittels eines Abtriebsritzels 113, einer Kette 103 oder eines Riemens an ein Ritzel 104 am Hinterrad 102 zum Antrieb des Elektrofahrrads 100 mittels des Hinterrads 102 übertragen wird. Typischerweise erzeugt der Nutzer bzw. Radfahrer mit dem rechten und linken Bein jeweils eine Trittkraft auf eines der Pedale 114, wobei die Trittkraft mittels jeweils einer Kurbel an die Tretachse 115 und mittels eines Abtriebsritzel 113 sowie einer Kette 103 zum Antrieb des Elektrofahrrads 100 an ein Nabenritzel 104 des Hinterrads 102 übertragen wird. Mit anderen Worten erzeugt der Nutzer des Elektrofahrrads 101 ein Fahrerdrehmoment an der Tretachse 115, welches die Trittkraft beziehungsweise die Trittkräfte des Nutzers repräsentiert, wobei das Fahrerdrehmoment an das Abtriebsritzel 113, welches mit der Tretachse 115 beziehungsweise Kurbelwelle verbunden ist, übertragen wird. Das Fahrerdrehmoment kann beispielsweise mit einem Drehmomentsensor in der Antriebseinheit 110 beziehungsweise im Bereich der Tretachse 115 erfasst werden. Der Elektromotor 111 wird vorteilhafterweise in Abhängigkeit des erfassten Fahrerdrehmoments zur Erzeugung eines Motordrehmoments angesteuert. Mit anderen Worten werden sowohl das Fahrdrehmoment als auch das Motordrehmoments mittels des Abtriebsritzel 113, der Kette 103 oder des Riemens an das Nabenritzel 104 am Hinterrad 102 zum Antrieb des Elektrofahrrads 100 übertragen. Somit unterstützt das mittels des Elektromotors 111 erzeugte Motordrehmoment den Nutzer beim Fahren des Elektrofahrrads 100, wodurch die manuelle Trittkraft des Nutzers auf die Pedale 114 beziehungsweise das Fahrerdrehmoment zur Beschleunigung des Elektrofahrrads 100 oder zum Halten einer Geschwindigkeit des Elektrofahrrads 100 reduziert werden kann. Alternativ kann das Elektrofahrrad 100 auch in einem Schiebehilfe-Betriebsmodus betrieben werden, wobei der Nutzer den Schiebehilfe-Betriebsmodus beziehungsweise die Schiebehilfe vorteilhafterweise mittels eines Schalters am Lenker des Elektrofahrrads 100 aktiviert oder deaktiviert. Im Betrieb der Schiebehilfe wird von dem Elektrofahrrad 100 mittels des Elektromotors 111 ein Motordrehmoment erzeugt, welches den Nutzer beim Schieben des Elektrofahrrads 100 unterstützt. Im Betrieb der Schiebehilfe ist keine Trittkraft des Nutzers zur Erzeugung des Motordrehmoments zum Antrieb des Elektrofahrrads 100 notwendig. Mit anderen Worten erfolgt im Schiebehilfe-Betriebsmodus beziehungsweise während der Schiebehilfe ein rein motorischer Antrieb des Elektrofahrrads 100 durch das erzeugte Motordrehmoment, wobei insbesondere ein Betrag der Geschwindigkeit des Elektrofahrrads 100 einen insbesondere gesetzlich vorgegebenen Maximalwert nicht überschreitet. Die am Elektrofahrrad 100 angeordnete Sensoreinheit 112 ist insbesondere eine inertiale Messeinheit und dazu eingerichtet, eine Längsbeschleunigung des Elektrofahrrads 100 in Richtung der Längsachse 190 des Elektrofahrrads 100 und/oder eine Querbeschleunigung des Elektrofahrrads in Richtung der Querachse 192 des Elektrofahrrads 100 und/oder eine vertikale Beschleunigung des Elektrofahrrads 100 in Richtung der Hochachse 191 des Elektrofahrrads 100 zu erfassen. Des Weiteren ist die Sensoreinheit 112 dazu eingerichtet, einen Nickwinkel zu erfassen, wobei der Nickwinkel eine Drehung 193 des Elektrofahrrads um die Querachse 192 des Elektrofahrrads repräsentiert. Ferner umfasst das Elektrofahrrad 100 einen optionalen Gewichtssensor 140 zur Erfassung des Fahrergewichts beziehungsweise zur Erfassung der Masse eines Radfahrers bzw. einer Masse eines Nutzers des Elektrofahrrads 100. Darüber hinaus ist an dem Elektrofahrrad 100 mindestens ein optionaler weiterer Gewichtssensor 141 angeordnet, wobei der weitere Gewichtssensor 141 dazu eingerichtet ist, eine Masse einer Zuladung des Elektrofahrrads 100 zu erfassen. Es kann vorgesehen sein, dass an dem Lastenfahrrad als Elektrofahrrad 100 mehrere weitere Gewichtssensoren 141 an einem Transportbehälter 120 des Elektrofahrrads 100 angeordnet sind. Der mindestens eine weitere Gewichtssensor 141 ist dazu eingerichtet, eine Masse der Zuladung des Elektrofahrrads 100 in dem Transportbehälter 120 beziehungsweise einer Ladefläche zu erfassen. Dazu ist der Transportbehälter 120 beispielsweise mittels des weiteren Gewichtssensors 141 an dem Elektrofahrrad 100 gelagert. Mit anderen Worten kann bei dem in Figur 1 dargestellten Elektrofahrrad 100 sowohl die Masse des Radfahrers mittels des Gewichtssensors 140 als auch die Masse der Zuladung in dem Transportbehälter 120 mittels des Gewichtssensors 141 erfasst beziehungsweise ermittelt werden, so dass die Gesamtmasse des Elektrofahrrads 100 ermittelt werden kann. Beispielsweise werden mit dem Lastenfahrrad Kinder transportiert, wobei der weitere Gewichtssensor 141 dazu eingerichtet ist, das Gewicht der Kinder zu erfassen. Der Gewichtssensor 140 und/oder der weitere Gewichtssensor 141 können vorteilhafterweise einen Drucksensor aufweisen.

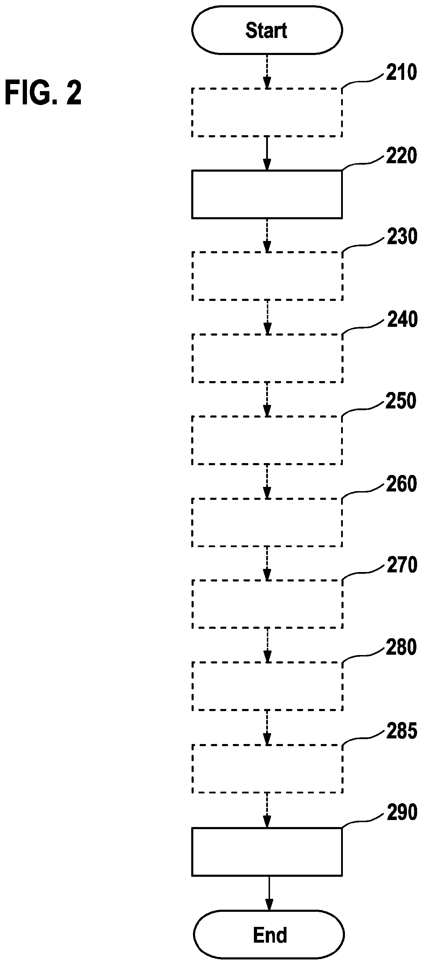

In Figur 2 ist ein Ablaufdiagramm des Steuerungsverfahrens als Blockschaltbild dargestellt. In einem ersten optionalen Schritt 210 wird eine Erkennung einer Aktivierung der Schiebehilfe beziehungsweise eines Schiebehilfe-Betriebsmodus durchgeführt, beispielsweise durch Erfassung einer Eingabe des Nutzers. Beispielsweise erfolgt die Erkennung 210 der Aktivierung der Schiebehilfe durch Erfassung eines Drückens eines Schalters zur Aktivierung der Schiebehilfe durch den Nutzer, wobei die Schiebehilfe insbesondere beim Lösen des Schalters deaktiviert wird. In einem Schritt 220 wird eine Längsbeschleunigung des Elektrofahrrads 100 in Richtung der Längsachse 190 des Elektrofahrrads 100 erfasst. Alternativ oder zusätzlich wird im optionalen Schritt 230 eine Masse zumindest eines Teils des Elektrofahrrads ermittelt beziehungsweise erfasst, beispielsweise die Masse des Radfahrers und/oder einer Zuladung des Elektrofahrrads auf einer Transportfläche beziehungsweise in dem Transportbehälter 120. Die optionale erfasste beziehungsweise ermittelte Masse repräsentiert vorteilhafterweise ein Gewicht der Zuladung und/oder ein Gewicht des Nutzers des Elektrofahrrads 100. In einem optionalen Schritt 240 kann es vorgesehen sein, eine Erfassung 240 einer Trittkraft des Nutzers durchzuführen. Die Trittkraft des Nutzers wird insbesondere als ein Fahrerdrehmoment an einer Tretachse des Elektrofahrrads erfasst. Das erfasste Fahrerdrehmoment repräsentiert somit die Trittkraft. Ferner wird im optionalen Schritt 250 eine Eingabe des Nutzers zu einem gewünschten Assistenzverhältnis zur Kraftunterstützung erfasst. Das gewünschte Assistenzverhältnis repräsentiert ein gewünschtes Motordrehmoment, welches in Abhängigkeit der Trittkraft zur Unterstützung des Antriebs des Elektrofahrrads 100 erzeugt werden soll. Beispielsweise liegt eine lineare Abhängigkeit zwischen dem erzeugten Motordrehmoment und der erfassten Trittkraft des Nutzers vor, wobei das gewünschte Assistenzverhältnis die jeweilige Steigung dieser linearen Abhängigkeit repräsentiert. Mit anderen Worten kann der Nutzer im optionalen Schritt 250 beispielsweise einen niedrigeren, mittleren oder hohen Grad an Kraftunterstützung durch das mittels des Elektromotors erzeugte Motordrehmoment auswählen. Darüber hinaus kann optional im Schritt 260 vorgesehen sein, ein aktuelles Gefährdungspotential in Abhängigkeit einer aktuellen Position des Elektrofahrrads und/oder in Abhängigkeit eines mittels einer Kamera am Elektrofahrrad erfassten Kamerabildes zu ermitteln. Die aktuelle Position des Elektrofahrrads wird beispielsweise mittels eines Ortssensors für ein satellitengestütztes Navigationssystem ermittelt. Optional oder zusätzlich wird das Gefährdungspotenzial in Abhängigkeit erfasster Kameradaten einer Kamera am Elektrofahrrads ermittelt. Es kann beispielsweise vorgesehen sein, dass in bestimmten Umgebungsbereichen, beispielsweise an unübersichtlichen Straßenkreuzungen und/oder bei engen Kurven der Fahrtstrecke, ein hohes Gefährdungspotential in Abhängigkeit einer erfassten Position des Elektrofahrrads ermittelt wird. Alternativ oder zusätzlich kann es vorgesehen sein, dass das Gefährdungspotenzial insbesondere eine aktuelle Wetterlage und/oder eine aktuelle Verkehrsdichte und/oder eine aktuelle Gefahrenstelle in der Umgebung des Elektrofahrrads repräsentiert. Darüber hinaus wird in einem optionalen weiteren Verfahrensschritt 270 eine Trittfrequenz des Nutzers erfasst. Die Trittfrequenz des Nutzers wird insbesondere an der Tretachse des Elektrofahrrads erfasst. Des Weiteren kann eine optionale Erfassung 280 des Nickwinkels des Elektrofahrrads erfolgen. Der Nickwinkel repräsentiert eine Drehung des Elektrofahrrads um die Querachse des Elektrofahrrads beziehungsweise eine Steigung der Fahrtstrecke des Elektrofahrrads und eine Fahrtrichtung des Elektrofahrrads. Die Erzeugung 290 des Motordrehmoments wird mittels des Elektromotors in Abhängigkeit der erfassten Längsbeschleunigung des Elektrofahrrads durchgeführt. Dabei wird das erzeugte Motordrehmoment insbesondere solange angepasst, insbesondere erhöht, bis eine vorgegebene Sollbeschleunigung des Elektrofahrrads erreicht beziehungsweise resultiert beziehungsweise überschritten wird. Für verschiedene Assistenzverhältnisse können unterschiedliche vorgegebene Sollbeschleunigungen vorgesehen sein. Mit anderen Worten wird beispielsweise im Schritt 290 das Motordrehmoment angepasst, wobei das Motordrehmoment so lange erhöht wird bis das Elektrofahrrad während der Schiebehilfe oder während der Fahrt bei gleicher Trittkraft des Nutzers im Wesentlichen unabhängig von der Gesamtmasse des Elektrofahrrads, insbesondere betragsmäßig näherungsweise mit der vorgegebenen Sollbeschleunigung, beschleunigt. Bei der Erzeugung 290 des Motordrehmoments resultiert insbesondere somit im Wesentlichen eine von der Gesamtmasse des Elektrofahrrads unabhängige Beschleunigung des Elektrofahrrads 100. Die Erzeugung 290 beziehungsweise Anpassung des Motordrehmoments kann optional in Abhängigkeit der ermittelten Masse des Elektrofahrrads erfolgen. Vorteilhafterweise wird in einem optionalen Zwischenschritt 285 des Verfahrens eine vom Nutzer beziehungsweise Radfahrer gewünschte Beschleunigungsphase in Abhängigkeit der erfassten Längsbeschleunigung und/oder in Abhängigkeit der erfassten Trittkraft beziehungsweise des erfassten Fahrerdrehmoments und/oder in Abhängigkeit der erfassten Trittfrequenz erkannt. Anschließend wird im Schritt 290 das Motordrehmoment optional in Abhängigkeit der erfassten Längsbeschleunigung und in Abhängigkeit der erkannten Beschleunigungsphase angepasst beziehungsweise erzeugt, insbesondere nur, wenn eine Beschleunigungsphase im Schritt 285 erkannt wird. Vorteilhafterweise erfolgt die Erzeugung 290 beziehungsweise Anpassung des Motordrehmoments des Elektromotors sobald die erfasste Längsbeschleunigung einen ersten Längsbeschleunigungsschwellenwert unterschreitet und/oder einen zweiten Längsbeschleunigungsschwellenwert überschreitet. In dieser optionalen Ausgestaltung des Schrittes 290 wird das Motordrehmoment an die erfasste Längsbeschleunigung vorteilhafterweise mittels des ersten Längsbeschleunigungsschwellenwert und des zweiten Längsbeschleunigungsschwellenwert angepasst, wodurch ein gegenüber alternativen Verfahrensabläufen besonders massenunabhängiges Beschleunigungsverhalten des Elektrofahrrads resultiert und eine Erzeugung beziehungsweise Anpassung des Motordrehmoments nur in vom Nutzer gewünschten Beschleunigungsphasen erfolgt. Das Motordrehmoment kann im Schritt 290 optional zusätzlich in Abhängigkeit der erfassten Trittkraft und in Abhängigkeit des erfassten Assistenzverhältnisses erzeugt beziehungsweise angepasst werden. Dabei wird vorteilhafterweise das erfasste Assistenzverhältnis in Abhängigkeit der erfassten Längsbeschleunigung angepasst. Alternativ oder zusätzlich wird der erste Längsbeschleunigungsschwellenwert und/oder der zweite Längsbeschleunigungsschwellenwert in Abhängigkeit des erfassten Assistenzverhältnisses oder des angepassten Assistenzverhältnisses geändert.

Es kann ferner optional im Schritt 290 vorgesehen sein, dass das Motordrehmoment zusätzlich in Abhängigkeit des ermittelten aktuellen Gefährdungspotentials erzeugt beziehungsweise angepasst wird. Beispielsweise kann in dieser Ausgestaltung die Beschleunigung des Elektrofahrrads massenunabhängig in Abhängigkeit einer Wetterlage als aktuelles Gefährdungspotenzial, beispielsweise bei schlechtem Wetter, und/oder in Abhängigkeit einer Verkehrslage als aktuelles Gefährdungspotenzial, beispielsweise bei hoher Verkehrsdichte, reduziert werden. Mit anderen Worten wird optional im Schritt 290 das Elektrofahrrad bei gleicher Trittkraft des Nutzers mittels des erzeugten Motordrehmoments im Wesentlichen massenunabhängig und zusätzlich in Abhängigkeit des ermittelten aktuellen Gefährdungspotential beschleunigt, wodurch die Sicherheit des Nutzers bei der Fahrt mit dem Elektrofahrrad erhöht wird. Es kann ferner optional im Schritt 290 vorgesehen sein, dass das Motordrehmoment zusätzlich in Abhängigkeit der erfassten Trittfrequenz und/oder in Abhängigkeit einer erfassten Bremsbetätigung erzeugt beziehungsweise angepasst wird. Beispielsweise kann eine Beschleunigungsphase oder eine Bremsphase oder eine Ausrollphase in Abhängigkeit der erfassten Trittfrequenz und/oder der erfassten Bremsbetätigung erkannt werden, wobei das Motordrehmoment anschließend in Abhängigkeit der erkannten Beschleunigungsphase oder der erkannten Bremsphase oder der erkannten Ausrollphase erzeugt beziehungsweise angepasst wird. Mit anderen Worten resultiert in dieser Ausgestaltung der Erfindung beispielsweise ein massenunabhängiges Ausrollen des Elektrofahrrads beziehungsweise eine massenunabhängige negative Beschleunigung. Es kann ferner optional im Schritt 290 vorgesehen sein, dass das Motordrehmoment zusätzlich in Abhängigkeit des erfassten Nickwinkels erzeugt beziehungsweise angepasst wird. Die Beschleunigung des Elektrofahrrads während einer aufwärts gerichteten Fahrt an einer Steigung der Fahrtstrecke ist im Stand der Technik aufgrund einer mit zunehmendem Nickwinkel steigenden Hangabtriebskraft geringer als die Beschleunigung des Elektrofahrrads während einer abwärts gerichteten Fahrt oder geringer als die Beschleunigung des Elektrofahrrads während einer Fahrt auf einer horizontalen Fahrtstrecke. Mit anderen Worten resultiert in dieser Ausgestaltung der Erfindung durch das in Abhängigkeit des Nickwinkels erzeugte Motordrehmoment eine massenunabhängige und steigungsunabhängige Beschleunigung des Elektrofahrrads. Die Erzeugung 290 des Motordrehmoments erfolgt außerdem optional zusätzlich in Abhängigkeit der erkannten Aktivierung der Schiebehilfe.

In Gleichung 1 ist ein sehr vereinfachter, nach der Beschleunigung a umgestellter, linearer Zusammenhang zwischen einer konstanten Antriebskraft F, welche am Umfang des Hinterrads des Elektrofahrrads wirkt und ein Antriebsdrehmoment erzeugt, und dem Gesamtgewicht m des Elektrofahrrads sowie der Längsbeschleunigung beziehungsweise Beschleunigung a des Elektrofahrrads dargestellt. Mit anderen Worten steigt bei konstanter Antriebskraft F die Längsbeschleunigung a des Elektrofahrrads mit abnehmendem Gesamgewicht des Elektrofahrrads und umgekehrt.

$$a \sim \frac{F}{m} \qquad \text{(Gleichung 1)}$$

Die Antriebskraft F ist im Falle eines Elektrofahrrads proportional zum Fahrerdrehmoment $M_F$ und dem mittels des Elektromotors erzeugten Motordrehmoment $M_M$, siehe Gleichung 2. Im Falle eines konstanten Assistenzverhältnisses $\alpha$ des Standes der Technik liegt ein linearer Zusammenhang zwischen dem Fahrerdrehmoment $M_F$ und dem erzeugten Motordrehmoment $M_M$ vor. Mit anderen Worten resultiert im Stand der Technik bei gleicher Trittkraft beziehungsweise gleichem Fahrerdrehmoment $M_F$ und somit konstanter Antriebskraft F eine gemäß Gleichung 1 steigende Längsbeschleunigung a des Elektrofahrrads mit abnehmendem Gesamtgewicht des Elektrofahrrads und umgekehrt.

$$F \sim (M_F + M_M) = (M_F + \alpha M_F) = M_F(1 + \alpha) \qquad \text{(Gleichung 2)}$$

Die Erzeugung 290 des Motordrehmoments erfolgt in dieser Erfindung in Abhängigkeit der erfassten Längsbeschleunigung. Optional wird das Motordrehmoment in Abhängigkeit der ermittelten Masse erzeugt, wobei die ermittelte Masse insbesondere ein Gewicht einer Zuladung und/oder ein Gewicht eines Nutzers des Elektrofahrrads repräsentiert. Zum Zwecke der Erzeugung einer gewichtsunabhängigen beziehungsweise zuladungsunabhängigen Beschleunigung des Elektrofahrrads wird insbesondere das erfasste Assistenzverhältnis $\alpha$ in Abhängigkeit der erfassten Längsbeschleunigung und/oder in Abhängigkeit der erfassten Masse m angepasst, insbesondere kontinuierlich und insbesondere bis als Längsbeschleunigung die vorgegebene Sollbeschleunigung erreicht bzw. unter- oder überschritten wird. Das Assistenzverhältnis $\alpha$ wird vorteilhafterweise zusätzlich in Abhängigkeit des Nickwinkels des Elektrofahrrads angepasst, wodurch auch an Steigungen der Fahrtstrecke eine gewichtsunabhängige und steigungsunabhängige Längsbeschleunigung des Elektrofahrrads resultiert.

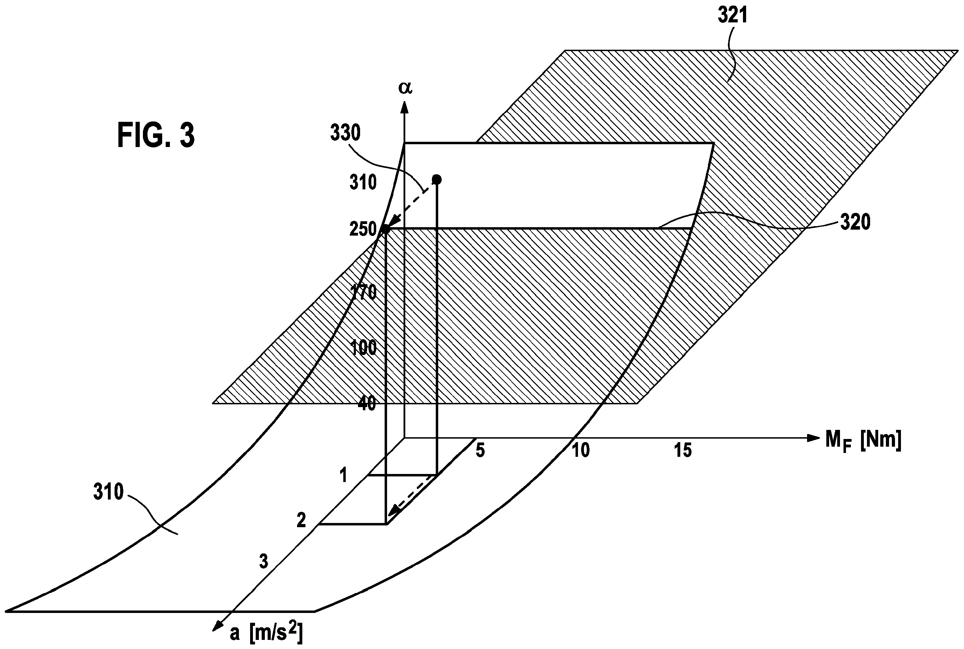

In Figur 3 ist ein Beispiel für ein dreidimensionales Diagramm zur Abhängigkeit des Assistenzverhältnisses $\alpha$ von der erfassten Längsbeschleunigung a und dem erfassten Fahrerdrehmoment $M_F$ dargestellt, wobei das Motordrehmoment $M_M$ in Abhängigkeit des Assistenzverhältnisses a erzeugt wird. Eine Normgerade 320 repräsentiert das erfasste gewünschte Assistenzverhältnis, welches typischerweise in einer vom Nutzer erwarteten Beschleunigungscharakteristik beziehungsweise in der vorgegebenen Sollbeschleunigung resultiert. Beispielsweise wählt der Nutzer durch eine erfasste Eingabe ein Assistenzverhältnis von 250 %. Das gewünschte Assistenzverhältnis gilt beispielsweise für alle erfassten Fahrerdrehmomente. Die Normgerade 320 verläuft durch den Schnittpunkt einer gekrümmten Unterstützungsebene 310 mit einer ursprünglichen Unterstützungsebene 321. Die ursprüngliche Unterstützungsebene 321 visualisiert das gewichtsunabhängige konstante Assistenzverhältnis im Stand der Technik, wobei unter gewissen Normbedingungen, beispielsweise auf einer horizontalen asphaltierten Fahrtstrecke mit einem Nutzer mit Fahreridealgewicht, eine vorgegebene Sollbeschleunigung resultiert. Die gekrümmte Unterstützungsebene 310 visualisiert eine erfindungsgemäße Abhängigkeit des erzeugten Motordrehmoments beziehungsweise des Assistenzverhältnisses von der erfassten Längsbeschleunigung. Dies wird im Folgenden erläutert: Wird beispielsweise eine Längsbeschleunigung eines schwer beladenen Lastenrads als Elektrofahrrad von 1 m/s² bei einem erfassten Fahrerdrehmoment von 5 Nm erfasst, so entspricht diese Beschleunigung des Elektrofahrrads 100 nicht der vom Nutzer erwarteten Beschleunigungscharakteristik beziehungsweise der vorgegebenen Sollbeschleunigung von 2m/s² für das erfasste gewünschte Assistenzverhältnis von 250%. Folglich wird gemäß der gekrümmten Unterstützungsebene 310 das erfasste gewünschte Assistenzverhältnis von 250 % auf den Betrag von 310 % angepasst, wodurch der Betrag des erzeugten Motordrehmoments gesteigert und somit die Beschleunigung beziehungsweise Längsbeschleunigung des Elektrofahrrads erhöht beziehungsweise angepasst wird. Der Nutzer nimmt diese angepasste Längsbeschleunigung als im Wesentlichen massenunabhängig wahr. Mit anderen Worten stellt der Verlauf der Unterstützungsebene 310 eine Anpassung der Fahrdynamik beziehungsweise des Assistenzverhältnisses $\alpha$ an variierende Gesamtmassen beziehungsweise unterschiedlicher Arten von Elektrofahrrädern und/oder unterschiedliche Zuladungen dar. Aufgrund der sich im zeitlichen Verlauf ändernden erfassten Längsbeschleunigung, wird das erzeugte Motordrehmoment beziehungsweise das Assistenzverhältnis $\alpha$ insbesondere laufend variiert beziehungsweise angepasst bis die vorgegebene Sollbeschleunigung erreicht oder der Beschleunigungsvorgang beendet und eine vom Nutzer gewünschte Geschwindigkeit des Elektrofahrrads erreicht ist. Mit anderen Worten wird das erzeugte Motordrehmoment beziehungsweise das Assistenzverhältnis, insbesondere innerhalb einer vorgegebenen Zeitspanne, so lange schrittweise oder kontinuierlich angepasst, bis für den Nutzer das durch Eingabe erfasste gewünschte Assistenzverhältnis von 250% resultiert. Innerhalb welcher Zeitdauer beziehungsweise wie schnell ein Nutzer eine gewünschte Geschwindigkeit erreicht beziehungsweise wann die Phase der Längsbeschleunigung abgeschlossen und mit welcher Geschwindigkeit des Elektrofahrrads er sich auf der gekrümmten Unterstützungsebene 310 entlang des Pfads 330 während einer Fahrt bewegt beziehungsweise wie lange das erzeugte Motordrehmoment beziehungsweise das Assistenzverhältnis angepasst wird, hängt vom Krümmungsradius der Unterstützungsebene 310 und dem Fahrerdrehmoment $M_F$ ab. Besonders bevorzugt wird zusätzlich zu dem zu Figur 3 beschriebenen Verfahren eine Masse zumindest eines Teils des Elektrofahrrads erfasst beziehungsweise ermittelt und das Motordrehmoment in Abhängigkeit der erfassten Masse erzeugt, insbesondere am Anfang des Verfahrens beziehugnsweise der vorgegebenen Zeitspanne. Es kann vorgesehen sein, den Krümmungsradius der Unterstützungsebene 310 abhängig von der erfassten Masse des Elektrofahrrads anzupassen.

**Patentansprüche**

1. Verfahren zur Steuerung eines Elektromotors (111) eines Elektrofahrrads (100) zum Antrieb des Elektrofahrrads (100), umfassend die Schritte

   • Erfassung (220) einer Längsbeschleunigung (a) des Elektrofahrrads (100) in Richtung der Längsachse (190) des Elektrofahrrads (100), und
   • Erzeugung (290) eines Motordrehmoments ($M_M$) mittels des Elektromotors (111) in Abhängigkeit der erfassten Längsbeschleunigung (a), wobei das Motordrehmoment ($M_M$) solange angepasst wird, bis eine vorgegebene Sollbeschleunigung erreicht beziehungsweise über- oder unterschritten ist.

2. Verfahren nach Anspruch 1, wobei das Motordrehmoment ($M_M$) des Elektromotors (111) angepasst wird, sobald die erfasste Längsbeschleunigung (a) einen ersten Längsbeschleunigungsschwellenwert unterschreitet und/oder einen zweiten Längsbeschleunigungsschwellenwert überschreitet.

3. Verfahren nach einem der vorhergehenden Ansprüche, aufweisend die Schritte

   • Ermittlung (230) einer Masse (m) zumindest eines Teils des Elektrofahrrads (100), wobei
   • die Erzeugung (290) des Motordrehmoments ($M_M$) zusätzlich in Abhängigkeit der ermittelten Masse (m) erfolgt

4. Verfahren nach einem der vorhergehenden Ansprüche, aufweisend die Schritte

   • Erfassung (240) einer Trittkraft des Nutzers, und
   • Erfassung (250) einer Eingabe des Nutzers zu einem gewünschten Assistenzverhältnis (a), wobei
   • die Erzeugung (290) des Motordrehmoments ($M_M$) zusätzlich in Abhängigkeit der erfassten Trittkraft und in Abhängigkeit des erfassten Assistenzverhältnisses (a) erfolgt, wobei das erfasste Assistenzverhältnis (a) in Abhängigkeit der ermittelten Masse und/oder in Abhängigkeit des erfassten Längsbeschleunigungswertes (a) angepasst wird und/oder der erste Längsbeschleunigungsschwellenwert und/oder der zweite Längsbeschleunigungsschwellenwert in Abhängigkeit des erfassten Assistenzverhältnisses (a) oder des angepassten Assistenzverhältnisses geändert wird.

5. Verfahren nach einem der vorhergehenden Ansprüche, aufweisend den Schritt

   • Ermittlung (260) eines aktuellen Gefährdungspotentials in Abhängigkeit einer aktuellen Position des Elektrofahrrads (100) und/oder in Abhängigkeit eines mittels einer Kamera am Elektrofahrrad (100) erfassten Kamerabildes, wobei das Gefährdungspotential insbesondere eine aktuelle Wetterlage und/oder eine aktuelle Verkehrsdichte und/oder eine aktuelle Gefahrenstelle in der Umgebung des Elektrofahrrads repräsentiert, wobei
   • die Erzeugung (290) des Motordrehmoments ($M_M$) zusätzlich in Abhängigkeit des ermittelten aktuellen Gefährdungspotentials erfolgt.

6. Verfahren nach einem der vorhergehenden Ansprüche, aufweisend den Schritt

   • Erfassung (270) einer Trittfrequenz des Nutzers und/oder einer erfassten Bremsbetätigung durch den Nutzer, wobei
   • die Erzeugung (290) des Motordrehmoments ($M_M$) zusätzlich in Abhängigkeit der erfassten Trittfrequenz und/oder der erfassten Bremsbetätigung erfolgt.

7. Verfahren nach Anspruch 6, wobei die Erzeugung (290) des Motordrehmoments ($M_M$) zusätzlich in Abhängigkeit einer Änderungsrate der erfassten Trittfrequenz durchgeführt wird.

8. Verfahren nach einem der vorhergehenden Ansprüche, aufweisend den Schritt

   • Erfassung (280) eines Nickwinkels des Elektrofahrrads (100), wobei der Nickwinkel eine Drehung des Elektrofahrrads (100) um die Querachse (192) des Elektrofahrrads (100) repräsentiert, wobei
   • die Erzeugung (290) des Motordrehmoments ($M_M$) zusätzlich in Abhängigkeit des erfassten Nickwinkels erfolgt.

9. Verfahren nach einem der vorhergehenden Ansprüche, aufweisend den Schritt

   • Erkennung (210) einer Aktivierung einer Schiebehilfe, wobei
   • die Erzeugung (290) des Motordrehmoments zusätzlich in Abhängigkeit der erkannten Aktivierung der Schiebehilfe erfolgt.

10. Steuergerät, wobei das Steuergerät dazu eingerichtet ist, ein Steuerungsverfahren nach einem der vorhergehenden Ansprüche durchzuführen.

11. Elektrofahrrad, umfassend ein Steuergerät nach Anspruch 10.

FIG. 1

**FIG. 2**

FIG. 3

**Europäisches Patentamt**
**European Patent Office**
**Office européen des brevets**

# EUROPÄISCHER RECHERCHENBERICHT

Nummer der Anmeldung

EP 20 21 1054

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2016 218374 B3 (BOSCH GMBH ROBERT [DE]) 22. Februar 2018 (2018-02-22) * Absätze [0021], [0022], [0023], [0024], [0027], [0028], [0031], [0033], [0035]; Abbildungen 1-3 * ----- | 1-11 | INV. B62J27/00 B62K7/00 B62M6/45 B62M6/50 |
| A | US 2019/291812 A1 (TSUCHIZAWA YASUHIRO [JP] ET AL) 26. September 2019 (2019-09-26) * Absätze [0004], [0048] - [0051], [0057], [0058], [0059] * ----- | 1,3,4,7 | |

**RECHERCHIERTE SACHGEBIETE (IPC)**

B62J
B62K
B62M

Der vorliegende Recherchenbericht wurde für alle Patentansprüche erstellt

| Recherchenort | Abschlußdatum der Recherche | Prüfer |
|---|---|---|
| Den Haag | 8. März 2021 | Huber, Florian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 & : Mitglied der gleichen Patentfamilie, übereinstimmendes Dokument

EPO FORM 1503 03.82 (P04C03)

**EP 3 835 185 A1**

**ANHANG ZUM EUROPÄISCHEN RECHERCHENBERICHT
ÜBER DIE EUROPÄISCHE PATENTANMELDUNG NR.**

EP 20 21 1054

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-03-2021

| Im Recherchenbericht angeführtes Patentdokument | Datum der Veröffentlichung | Mitglied(er) der Patentfamilie | Datum der Veröffentlichung |
|---|---|---|---|
| DE 102016218374 B3 | 22-02-2018 | DE 102016218374 B3 | 22-02-2018 |
| | | EP 3299272 A1 | 28-03-2018 |
| | | TW 201815620 A | 01-05-2018 |
| | | US 2018086417 A1 | 29-03-2018 |
| US 2019291812 A1 | 26-09-2019 | CN 110294062 A | 01-10-2019 |
| | | DE 102019106587 A1 | 26-09-2019 |
| | | JP 2019166911 A | 03-10-2019 |
| | | TW 201940376 A | 16-10-2019 |
| | | US 2019291812 A1 | 26-09-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2931550 B1

- DE 102010017742 A1